# EUROPÄISCHE PATENTSCHRIFT

(11) **EP 0 919 587 B1**
(45) Veröffentlichungstag und Bekanntmachung des Hinweises auf die Patenterteilung: **11.02.2004**
(21) Anmeldenummer: 98122211.0
(22) Anmeldetag: 23.11.1998
(51) Int. Cl.: C08K 3/36, C08L 67/00, C08J 3/205, C09D 167/00

(54) **Viskositätsstabilisierte wässrige Polyesterdispersionen, ihre Herstellung und ihre Verwendung als Bindemittel für wasserverdünnbare Anstrichmittel**
Aqueous viscosity-stable polyester dispersions, their preparation and their use as binder for water-dilutable coating compositions
Dispersions de polyester aqueuses à viscosité stable, leur préparation et leur utilisation comme agent liant pour compositions de revêtement diluables à l'eau

(30) Priorität: 28.11.1997 AT 201897
(43) Veröffentlichungstag der Anmeldung: 02.06.1999
(73) Patentinhaber: Surface Specialties Austria GmbH, 8402 Werndorf (AT)
(72) Erfinder: Weinberger, Manfred Dr., 8010 Graz (AT); Billiani, Johann Dr., 8042 Graz (AT)
(74) Vertreter: Deckers, Hellmuth, Dr.

(56) Entgegenhaltungen:
- EP-A- 0 612 779
- DE-A- 2 524 309

## Beschreibung

Die Erfindung betrifft viskositätsstabilisierte wäßrige Polyester-Dispersionen, ein Verfahren zu ihrer Herstellung und ihre Verwendung.

Die Verwendung von Kieselsäure bzw. Siliciumdioxid und/oder hydrolysierbaren Siliciumverbindungen zur Verbesserung bestimmter Eigenschaften bei Beschichtungsmitteln ist schon lange bekannt. So wird in der US-A 2,432,484 die Verwendung von kolloidalem Siliciumdioxid beschrieben in Form eines Sols in Wasser oder anderen geeigneten Lösungsmitteln wie Glykoläther zur Verbesserung der Abriebfestigkeit der damit hergestellten Beschichtungen. Aus der EP-A 0 180 129 ist die Verwendung von amorpher, poröser Kieselsäure mit einer spezifischen Oberfläche von 300 bis 900 m²/g in Kombination mit Alkylalkoxysilanen als Beschichtung von Kunststoffen zur Verbesserung der Kratzfestigkeit bekannt.

In der US-A 3,986,997 werden wäßrige Überzugsmittel auf der Basis von Silanolkondensaten und Siliciumdioxid beschrieben, bestehend aus einer Dispersion von kolloidalem SiO₂ in einer Lösung eines Teilkondensates eines Alkylsilanols. Ähnliche Beschichtungsmassen sind aus der DE-A 2 811072 bekannt, die Massenanteile von 30 bis 50 % kolloidaler Kieselsäure und 50 bis 70 % Siloxan enthalten. Eine Beschichtungsmasse aus partiell hydrolysierten Alkylalkoxysilanen in alkalischer Lösung und Siliciumdioxid ist in der US-A 3,324,055 beschrieben. In US-A 4,526,910 wird die Herstellung kolloidaler Kieselsäure in organischen Lösungsmitteln durch gezielte Hydrolyse von Tetraalkoxysilanen in diesen Lösungsmitteln erläutert. In der DE-A 3 014 411 wird eine wäßrige Überzugsmasse beschrieben, bestehend aus einem Melamin-Formaldehyd-Harz, kolloidalem Siliciumdioxid und einem Alkylalkoxysilan der Form RSi(OR)₃. Im wesentlichen beschränkt sich die Verwendung von SiO₂ und Siliciumverbindungen auf die Verbesserung mechanischer Eigenschaften von Beschichtungen, die mit den so modifizierten Beschichtungsmitteln hergestellt werden.

Zur Verbesserung rheologischer Eigenschaften von Beschichtungsmitteln gibt es noch wenig Literatur. So ist die EP-A 0 287 589 gerichtet auf die Verwendung von Alkylalkoxysilanen und Aminoalkyltrialkoxysilanen zur Funktionalisierung von Hetero-Polysacchariden als Verdickungsmittel für thixotrope Beschichtungsmassen. In der EP-A 0 608 107 wird die Herstellung von fremdemulgierten wäßrigen Kieselsäure-Dispersionen und Aluminiumsilikat-Dispersionen beschrieben, die durch Emulgierung von pyrogener ("fumed") Kieselsäure oder Aluminiumsilikaten mittels Dispergierhilfsmitteln (Emulgatoren), die Polyanionen bilden (beispielhaft genannt werden meta-Phosphorsäure, Polyphosphorsäure und deren Salze, sowie Borsäure und deren Salze) gebildet werden. Die Teilchengröße der so erhaltenen Kieselsäure-Dispersionen liegt zwischen 60 bis 500 nm und hängt sehr stark von der Emulgatorkonzentration ab. Die damit sauer stabilisierte Kieselsäure-Dispersion dient zur Erhöhung des Korrosionsschutzes von wäßrigen Beschichtungsmitteln, bevorzugt von Epoxidharzdispersionen.

Im Zusammenhang mit Polyester-Dispersionen sind jedoch alkalisch stabilisierte wäßrige Kieselsäure-Dispersionen (also nicht fremdemulgierte saure Kieselsäure-Dispersionen, wie oben beschrieben) und Alkoxysilane oder deren Folgeprodukte noch nicht erwähnt worden.

Polyesterharze werden durch Polykondensation, bevorzugt in der Schmelze, von einer oder mehrereren mehrfunktionellen organischen Hydroxylverbindungen mit einer oder mehreren mehrfunktionellen organischen Carbonsäuren, gegebenenfalls unter Zusatz von monofunktionellen aliphatischen gesättigten oder bevorzugt ungesättigten Carbonsäuren, in bekannter Weise hergestellt. Die Begriffe "Polyester(harz)" und "Alkydharz" werden hier als gleichbedeutend verwendet.

Wäßrige Dispersionen solcher Polyesterharze sind üblicherweise anionisch stabilisiert. Das bedeutet, daß bei der Polyestersynthese bei einer bestimmten Restsäurezahl (entsprechend einem von Null verschiedenen Rest-Gehalt an freien Carboxylgruppen) die Polykondensation abgebrochen wird, und diese Säuregruppen dann (teilweise bis vollständig) mit Basen neutralisiert werden, bevorzugt mit Ammoniak oder Aminen, aber auch mit Alkali- oder Erdalkalihydroxiden. Durch die Neutralisation werden stark polare Salzgruppen gebildet, der Polyester kann dann in Wasser dispergiert werden.

Die so gewonnenen Polyesterharzdispersionen sind alkalisch, mit pH-Werten über 7, bevorzugt im pH-Bereich von 8 bis 10. Sie unterliegen im wäßrigen Medium einer (alkalisch katalysierten) Hydrolyse der Esterbindungen, die unter anderem zu einem starken Viskositätsabbau innerhalb weniger Monate führen kann. Derartige Systeme sind daher nur kurz lager- und verarbeitbar, ihre technische Anwendbarkeit wird dadurch wesentlich eingeschränkt. Dieser Mangel an Stabilität ist nicht nur bei den (im Folgenden als "nichtmodifizierten" bezeichneten) Polyesterharz-Dispersionen der beschriebenen Zusammensetzung zu beobachten; er tritt auch bei mit trocknenden oder nicht trocknenden Fettsäuren modifizierten Polyesterharzen auf, sowie bei den Acryl-, Urethan-, und Epoxid-modifizierten Polyesterharzen.

Unter Acryl-modifizierten Polyesterharzen werden solche Polyester verstanden, die herstellbar sind durch Emulsionspolymerisation von olefinisch ungesättigten Monomeren in wäßrigem Medium in Gegenwart eines wasserlöslichen Polyesters oder Alkydharzes, das auch durch Einbau von Epoxidharz-Strukturen und Urethan-Strukturen modifiziert sein kann. Dabei beträgt der Massenanteil des Alkydharzes im Feststoff des "Acryl-modifizierten Polyesters" ca. 30 bis 80 %, und der des von den olefinisch ungesättigten Monomeren herrührende Anteil am Polymer ca. 20 bis 70 %, wobei sich die Massenanteile stets zu 100 % ergänzen. Solche modifizierten Polyesterharze sind beispielsweise in der EP-B 0 267 562, der EP- B 0 305 795, der WO 95/27 762 und der EP-B 0 295 403 beschrieben.

Unter Urethan-modifizierten Polyestern werden solche verstanden, bei denen Massenanteile in der Mischung der Edukte (Ausgangsprodukte) von ca. 10 bis ca. 45 %, bevorzugt ca. 15 bis ca. 35 %, an linearen, verzweigten oder cyclischen aliphatischen Polyolen mit 2 bis 6 Hydroxylgruppen pro Molekül; ca. 5 bis ca. 35 %, bevorzugt 10 bis 30 %, an mehrfunktionellen Carbonsäuren; ca. 5 bis ca. 30 %, bevorzugt 10 bis 25 %, an mehrfunktionellen, bevorzugt difunktionellen, Isocyanaten; 0 bis ca. 70 % an gesättigten oder ein- oder mehrfach ungesättigten Fettsäuren; und 0 bis ca. 20 % an monofunktionellen aromatischen oder cycloaliphatischen Monocarbonsäuren eingesetzt werden. Ähnliche Harze werden beispielsweise in der DE-A 33 15 690 und DE-A 33 15 691 beschrieben. Alkydharze, die sowohl mit Acrylaten als auch durch Einbau von Urethan-Strukturen modifiziert sind, sind in der DE-A 32 19 413 und der DE- A 32 19 471 beschrieben.

Unter Epoxid-modifizierten Polyestern schließlich werden solche Polyester verstanden, bei denen Massenanteile von bis zu ca. 40 % an von Polyepoxiden abgeleiteten Polyhydroxylverbindungen durch Kondensation mit den Säurekomponenten in dem Polyester eingebaut sind. Solche Harze werden beispielsweise in der EP-A 0 355 761 beschrieben.

Unter Fettsäure-modifizierten Polyesterharzen werden solche verstanden, in deren Monomermischung ein Massenanteil von bis zu ca. 40 % der mehrfunktionellen organischen Carbonsäuren durch monofunktionelle, gesättigte oder ungesättigte Fettsäuren ersetzt wurde.

Es wurde nun gefunden, daß wäßrige Dispersionen von modifizierten oder unmodifizierten Polyesterharzen, die zusätzlich eine alkalisch stabilisierte wäßrige Kieselsäure-Dispersion enthalten, lagerstabil sind und über einen Zeitraum von mindestens 6 Monaten bei Lagerung bei Raumtemperatur (20 bis 25 °C) keinen Viskositätsabfall zeigen. Die bevorzugten stabilisierten Dispersionen zeigen über mindestens 12, besonders bevorzugt über mindestens 18 Monate keinen Viskositätsabfall. Der Anteil an Siliciumdioxid kann durch Zusatz von wäßrigen Kieselsäuredispersionen zu wäßrigen Dispersionen von Polyestern eingebracht werden (Ausführungsform 1). Es wurde weiters gefunden (Ausführungsform 2), daß der stabilisierende Kieselsäure-Anteil auch durch mit Wasser hydrolysefähige Siliciumverbindungen wie beispielsweise Alkoxysilane in die Polyesterdispersion eingebracht werden kann und dadurch gleichfalls eine Viskositätsstabilisierung eintritt. Auch die Kombination beider genannten Verfahrensweisen führt zu einer Viskositätsstabilisierung.

Unter "alkalisch stabilisierter wäßriger Kieselsäuredispersion" wird im Rahmen dieser Erfindung ein Produkt bezeichnet, das sich nach Dispergieren von fein verteiltem Siliciumdioxid oder dessen hydratisierten Formen in Wasser in Gegenwart von Alkalien bildet, ebenso auch ein Produkt, das sich bei Hydrolyse von mit Wasser zersetzbaren Siliciumverbindungen (wie beispielsweise Alkoxysilanen) in wäßrigem alkalischen Medium bildet. Solche Produkte werden im Handel beispielsweise von den Firmen Wacker Chemie, Hüls, Dow Corning oder Clariant France angeboten. Als "Kieselsäure" wird demgemäß die disperse Phase dieser Dispersionen bezeichnet. Die Stabilisierung der alkalischen wäßrigen Kieselsäure-Dispersion erfolgt direkt an der Polykieselsäure-Matrix durch Kationen ausgewählt aus den Alkali- und Erdalkali-Metall-Kationen, Ammonium- und Aluminium-Kationen. Zusätzliche Dispergiermittel oder Emulgatoren sind für eine Stabilisierung dieser Dispersionen nicht notwendig, sie sind daher in den für die Erfindung eingesetzten Kieselsäure-Dispersionen nicht enthalten. Die mittlere Teilchengröße der erfindungsgemäß eingesetzten Kieselsäure-Dispersionen ist 5 bis 130 nm, bevorzugt ca. 10 bis ca. 100 nm, besonderes bevorzugt ca. 15 bis ca. 40 nm. Ihre spezifische Oberfläche beträgt 5 bis 500 mm²/g, bevorzugt ca. 10 bis ca. 400 mm²/g. Bevorzugt werden solche wäßrigen Kieselsäure-Dispersionen der oben beschriebene Art mit einem Feststoff-Massenanteil von 10 bis 80 %, besonders bevorzugt von 20 bis 60 %, und einem pH-Wert von ca. 7,0 bis ca. 14, 0 eingesetzt. Diese alkalisch stabilisierten wäßrigen Kieselsäure-Dispersionen sind leicht milchig trüb, opaleszent, oder auch klare Lösungen.

Die Erfindung betrifft daher viskositätsstabilisierte wäßrige Polyesterdispersionen, enthaltend eine Mischung von
a) Säuregruppen enthaltendem (gegebenenfalls mit trocknenden und/oder nichttrocknenden Fettsäuren, oder acryl-, urethan-, oder epoxid-modifizierten) Polyesterharz,
b) Neutralisationsmittel für das Polyesterharz, wobei die Menge des Neutralisationsmittel so gewählt wird, daß es 10 bis 200 % der Stoffmenge der dissoziierbaren Protonen der Säuregruppen im Polyesterharz binden oder neutralisieren kann; bevorzugt entspricht die zugegebene Menge an Neutralisationsmittel einer 30 bis 100 %igen Neutralisation, besonders bevorzugt einer 40 bis 70 %igen Neutralisation, wobei die Neutralisationsmittel ausgewählt sind aus Ammoniak und organischen Aminen, sowie Alkali- und Erdalkalihydroxiden,
c) gegebenenfalls einem organischen Hilfslösungsmittel,
d) Kieselsäure in Form einer alkalisch stabilisierten wäßrigen Kieselsäure-Dispersion in einer Menge, daß ihre als SiO₂ berechnete Masse 0,1 bis 50 % der Masse des Polyesterharzes beträgt, und
e) Wasser.

Das eingesetzte Polyesterharz weist bevorzugt eine Säurezahl zwischen 10 und 200 mg/g, bevorzugt 30 bis 100 mg/g, besonders bevorzugt 40 bis 70 mg/g auf.

Die Säurezahl ist gemäß DIN 53 402 definiert als der Quotient derjenigen Masse an Kaliumhydroxid *m* _{KOH} , die erforderlich ist, um eine zu untersuchende Probe zu neutralisieren, und der Masse *m* _{B} dieser Probe (Masse des Feststoffes der Probe bei Lösungen oder Dispersionen); ihre übliche Einheit ist "mg/g".

Geeignete Polyesterharze werden durch Polykondensation, bevorzugt in der Schmelze, von einer oder mehrereren mehrfunktionellen organischen Hydroxylverbindungen aa mit einer oder mehreren mehrfunktionellen organischen Carbonsäuren **ab** in bekannter Weise hergestellt. Dabei weisen die Verbindungen aa und die Verbindungen **ab** in der Mischung jeweils unabhängig voneinander bevorzugt eine mittlere Funktionalität von 1,3 bis 2,5 auf. Besonders bevorzugt werden jeweils difunktionelle Edukte **aa** und **ab** eingesetzt. Die Eduktmischungen **aa** und **ab** können jedoch auch monofunktionelle oder tri- und mehrfunktionelle Verbindungen enthalten, wobei deren Mengen bevorzugt so gewählt werden, daß die angegebenen Grenzen für die mittlere Funktionalität der Mischung der Edukte eingehalten werden.

Die mehrfunktionellen organischen Hydroxylverbindungen **aa** haben 2 bis 6, bevorzugt 2 bis 4, Hydroxylgruppen, und sind abgeleitet von aliphatischen linearen, verzweigten oder cyclischen Kohlenwasserstoffen mit 2 bis 20, bevorzugt 2 bis 8 Kohlenstoffatomen. Sie werden einzeln oder in Mischung eingesetzt. Als besonders geeignet werden Glykol, 1,2-und 1,3-Propylenglykol, Butandiol-1,4, Neopentylglykol, Glycerin, Trimethylolpropan, Sorbit und Pentaerythrit genannt. Ebenso können auch Massenanteile von bis zu 10 % der Masse an den Polyester-Edukten **aa** und **ab** an Polyäthylenglykol mit Polymerisationsgraden von 2 bis 50 bei der Kondensation als Comonomer eingesetzt werden. Wie oben erwähnt, können auch Monoalkohole in untergeordneten Mengen zugesetzt werden.

Die mehrfunktionellen organischen Carbonsäuren können aromatisch oder aliphatisch sein, wobei lineare, verzweigte und cyclische Carbonsäuren einzeln oder in Mischung eingesetzt werden können. Sie haben zwei bis vier Carbonsäuregruppen, bevorzugt zwei oder drei, und insgesamt 2 bis 40, bevorzugt 3 bis 36 Kohlenstoffatome. Geeignet sind beispielsweise Bernsteinsäure, Adipinsäure, Hexahydrophthalsäure, Phthalsäure sowie Iso- und TerePhthalsäure, 2,3- und 2,6-Naphthalindicarbonsäure, Trimellithsäure, Benzophenontetracarbonsäure, Sulfonyldibenzoesäure, sowie dimerisierte Fettsäuren mit durchschnittlich 36 Kohlenstoffatomen.

Es ist, wie oben bereits beschrieben, auch möglich, einen Teil der mehrfunktionellen durch monofunktionelle Carbonsäuren zu ersetzen, die bevorzugt cyclisch oder polycyclisch sind, wie beispielsweise Benzoesäure oder Harzsäuren wie Abietinsäure. Ebenso ist es möglich, bis zu 80 % der Stoffmenge der Komponenten **aa** und **ab** durch Hydroxycarbonsäuren zu ersetzen, die jeweils mindestens eine Hydroxyl- und mindestens eine Carboxylgruppe aufweisen. Geeignete Verbindungen sind beispielsweise γ-Hydroxy-Buttersäure, ε-Hydroxycapronsäure, para-Hydroxybenzoesäure sowie auch Dimethylolpropionsäure.

Es ist im Rahmen der Erfindung bevorzugt, die oben genannten modifizierten Polyesterharze einzusetzen, die mit Acrylmonomeren, durch Einbau von Urethanstrukturen oder Epoxidharzen sowie auch mit trocknenden oder nichttrocknenden Fettsäuren modifiziert sind. Die Offenbarung der genannten Patentschriften und Patentanmeldungen wird durch die Bezugnahme in diese Beschreibung aufgenommen.

Die Herstellung der erfindungsgemäßen stabilisierten Polyester-Dispersion kann gemäß der ersten Ausführungsform unter Verwendung einer wäßrigen Kieselsäuredispersion auf unterschiedliche Art und Weise erfolgen:
1a) Eine wäßrige Kieselsäuredispersion wird mit dem Neutralisationsmittel versetzt. In diese Dispersion wird das Polyesterharz (gegebenenfalls in einem organischen Hilfs-Lösungsmittel angelöst) emulgiert (Inversverfahren).
1b) Eine wäßrige Kieselsäuredispersion wird mit dem Neutralisationsmittel versetzt. Diese Dispersion wird in dem Polyesterharz (das gegebenenfalls in einem organischen Hilfs-Lösungsmittel angelöst ist) emulgiert (Direktverfahren).
1c) Die wäßrige Kieselsäuredispersion wird in dem Polyesterharz (gegebenenfalls in einem organischen Hilfs-Lösungsmittel angelöst) emulgiert und anschließend die Mischung direkt (analog zu 1b) oder
1d) invers (analog zu 1a) in Neutralisationsmittel-hältiges Wasser emulgiert.
1e) Das Polyesterharz wird teilweise oder gänzlich mit dem Neutralisationsmittel neutralisiert ("Vorneutralisation") und anschließend gemäß 1a), 1b), 1c) oder 1d) weiterverarbeitet.

Die Herstellung und die Einarbeitung der Kieselsäuredispersion kann auch gemäß der Ausführungsform 2 erfolgen, indem man ausgeht von Alkoxysilanen (Kieselsäure-Estern) der allgemeinen Formel Si(OR)₄ oder deren Oligomeren der allgemeinen Formel RO[Si(OR)₂]ₙ OR mit n = 2 bis 20, wobei die Reste R jeweils unabhängig voneinander ausgewählt sind aus Methyl-, Äthyl-, n-Propyl-, iso-Propyl, n-, iso-, sek.- und tert.- Butylsowie Oligo-Äthylenglykoläther-Resten -[CH₂CH₂O]ₙR¹ mit n = 1 bis 10 und R¹ = (CH₂)ₙCH₃ mit n = 0 bis 10; alkylierten Alkanolamin-Resten -[CH₂]ₙ N R²₂ mit n = 1 bis 5 und R²=(CH₂)ₙCH₃ mit n = 0 bis 10, die jeweils mittels Wasser hydrolysiert werden. Die Reste R, R¹ und R² können auch im selben Molekül unterschiedliche Bedeutungen annehmen. Bevorzugt eignen sich Si(OCH₃)₄, Si(OCH₂CH₃)₄, Si(OCH₂CH₂CH₃)₄, Si[(OCH(CH₃)₂]₄, Si[(OCH₂CH(CH₃)₂]₄, Si(OCH₂CH₂OCH₃)₄, Si(OCH₂CH₂OCH₂CH₃)₄, Si(OCH₂CH₂OCH₂CH₂CH₃)₄, Si[(OCH₂CH₂OCH₂CH(CH₃)₂]₄, Si(OCH₂CH₂OCH₂CH₂CH₂CH₃)₄, CH₃O[Si(OCH₃)₂]ₙOCH₃ mit n = 2 bis 19, CH₃CH₂O[Si(OCH₂CH₃)₂]ₙOCH₂CH₃ mit n = 2 bis 19 und Si[O(CH₂)ₙN(CH₃)₂]₄ mit n = 1 bis 5.

Damit ergeben sich die folgenden erfindungsgemäßen Ausführungsformen mit einer Bildung der Kieselsäuredispersion in situ:
2a) Der saure, noch nicht neutralisierte Polyester, eventuell angelöst in einem organischen Lösungsmittel, wird mit dem Alkoxysilan und einer stöchiometrischen Menge Wasser (ausreichend zur Hydrolyse des Alkoxysilans) versetzt. Es kommt zur Hydrolyse des Alkoxysilans unter Bildung von kolloidal verteilter Kieselsäure. Die intermediär auftretenden Silanolgruppen-haltigen Hydrolyse-Produkte können in bekannter Weise zu Polysiloxanen kondensieren (Selbstkondensation), sie können aber auch mit den Hydroxylgruppen des Polyesters kondensieren. Damit liegt in dieser Ausführungsform mitunter auch eine chemische Verknüpfung der dispergierten Kieselsäure mit dem Polyester vor. Bei weiterer Wasserzugabe während des Emulgier-Vorganges wird diese Verknüpfung wieder durch Hydrolyse gespalten. Der Hydrolysevorgang ist dabei besonders rasch, wenn das basische Neutralisationsmittel beim Emulgieren mitverwendet wird.
2b) Der saure, noch nicht neutralisierte Polyester, eventuell angelöst in einem organischen Lösungsmittel, wird mit dem Neutralisationsmittel versetzt ("vorneutralisiert"). Nach der Zugabe des Alkoxysilans und einer stöchiometrischen Menge Wasser (ausreichend zur Hydrolyse des Alkoxysilans) kommt es sehr rasch zur Hydrolyse des Alkoxysilans. Die intermediär auftretenden Silanolgruppen kondensieren augenblicklich mit sich selbst unter Aufbau von polymeren Silikaten (Silanolgruppen sind in einem alkalischem Medium völlig instabil). Anschließend erfolgt die Emulgierung zu einer wäßrigen Polyesterdispersion.

Es ist auch ohne weiteres möglich, die wäßrige Kieselsäuredispersion durch Hydrolyse des Alkoxysilans in alkalischer wäßriger Lösung herzustellen und anschließend das Polyesterharz oder die Polyester-Dispersion einzumischen, wobei nach dieser Zugabe auch weiteres Wasser zugefügt werden kann. Diese Ausführungsformen sind jedoch weniger bevorzugt.

Geeignete organische Hilfslösungsmittel sind Alkohole und Ätheralkohole, bevorzugt Monoalkyläther von Äthylenglykol, Diäthylenglykol, Propylenglykol und Dipropylenglykol; besonders bevorzugt sind 2-Butoxyäthanol (Butylglykol) und (2-Äthoxy)-2-äthoxyäthanol (Diäthylenglykolmonoäthyläther) sowie (2- Methoxy)-2-propoxypropanol (Dipropylenglykolmonomethyläther).

Die erfindungsgemäßen Dispersionen sind milchige bis transparente, opake Flüssigkeiten mit mehr oder weniger ausgeprägter Strukturviskosität (sog. "Scher-Entzähen" oder "shear thinning", also Absinken der Viskosität bei erhöhter Scherung). Die Viskosität kann unmittelbar nach der Herstellung etwas schwanken, pendelt sich aber auf ein konstantes Niveau ein, das dann über viele Monate erhalten bleibt. Auch bei sehr hohen pH-Werten von über 10 bleibt die Viskosität bei Lagerung konstant. Abhängig vom Polyestertyp und der Menge der in der Dispersion vorhandenen Kieselsäure (Angabe als SiO₂) kann es auch zunächst zu einem Anstieg der Viskosität kommen, die aber dann bei Lagerung bei Raumtemperatur nach wenigen Tagen einen konstanten Wert erreicht. Die Viskosität bleibt bei Lagerung in einem Temperaturbereich von 0 °C bis 35 °C mindestens vier Monate konstant; bei 10 °C bis 30 °C über fünf Monate; bei 20 °C bis 25 °C über zwölf Monate. Auch bei Lagerung bei bis zu 40 °C bleibt die Viskosität der Dispersion länger als drei Monate unverändert.

Als wäßrige Kieselsäuredispersionen können alle gängigen Produkte der verschiedensten Hersteller eingesetzt werden (Wacker Chemie, Hüls AG, Dow Corning usw.). Die Silanolgruppen der (Poly-) Kieselsäure sind dabei meist mit Alkali- oder Erdalkali-Kationen abgesättigt. Bevorzugt werden wäßrige Kieselsäuredispersionen mit einem Massenanteil von 1 % bis 80 % SiO₂ im Feststoff, besonders bevorzugt von 20 % bis 60 % und einem pH-Wert von 7,0 bis 14,0 eingesetzt. Diese Dispersionen können leicht milchig bis klar sein.

Bei sehr hohen SiO₂-Massenanteil von über 10 % der Masse der Dispersion in Lieferform kommt es bekannterweise zur Bildung von härteren, kratzfesteren und chemisch resistenteren Beschichtungen, die mitunter auch mattiert sein können.

Die unter Verwendung der erfindungsgemäß viskositätsstabilisierten Polyester-Dispersionen hergestellten Bindemittel finden Verwendung in Anstrichmitteln für z. B. Holz, Metall, Kunststoff und Beton.

Die folgenden Beispiele erläutern die Erfindung, ohne sie in ihrem Umfang zu beschränken. Alle Gehalts-Angaben in Prozent bedeuten Massenanteile (Verhältnis der Masse eines Stoffes zur Summe der Massen aller Stoffe in der Mischung; z.B. Verhältnis der Masse eines gelösten Stoffes zur Masse der Lösung), und Teile bedeuten Masseneinheiten (z. B. Gramm), sofern nichts anderes angegeben ist. Die angegebenen Viskositäten sind die Werte für die dynamische Viskosität (nach DIN EN ISO 3219), gemessen mit einem Kegel-Platte-Gerät bei 23 °C und einer Scherrate von 10 s⁻¹, die übliche Einheit ist mPa·s.

### Beispiel 1:

420 Teile eines Polyesters gemäß Beispiel 1 der AT-B 387 971 (EP-A 0 267 562), der mit einer trocknenden Fettsäure und Acrylaten modifiziert ist, mit einer Säurezahl von 50 mg/g, 87 %ig angelöst in Butylglykol, wurden in einer Lösung bestehend aus 512 Teilen Wasser, 19,5 Teilen 25 %igem Ammoniak und 48,5 Teilen einer 30 %igen wäßrigen Kieselsäuredispersion (®Klebosol R 30) dispergiert. Das Produkt wies folgende Kenndaten auf:

| | |
|---|---|
| Festkörper-Massenanteil | ca. 38 % |
| Säurezahl | 55 mg/g |
| Dyn.Viskosität | 8500 mPa·s |
| pH-Wert, 10 %ige Lösung in Wasser | 8,4 |

Nach einer Lagerzeit von 18 Monaten bei Raumtemperatur in einem verschlossenen Gebinde betrug die Viskosität immer noch ca. 8400 mPa·s, während der Blindwert (dieselbe Dispersion ohne Kieselsäurezusatz) von einem Ausgangswert von 9000 mPa·s bereits auf ca. 2000 mPa·s abgefallen war.

### Beispiel 2:

430 Teile eines mit trocknenden Fettsäuren modifizierten Epoxidharzes gemäß Beispiel SE1 der EP-A 0 355 761 mit einer Säurezahl von 45 mg/g und 6 Teile Methoxypropoxypropanol wurden in einer Lösung bestehend aus 484 Teilen Wasser, 20 Teilen 25 %igem Ammoniak und 60 Teilen einer 30 %igen Kieselsäuredispersion (®Klebosol R 30) dispergiert. Das Produkt wies folgende Kenndaten auf:

| | |
|---|---|
| Festkörper-Massenanteil | ca. 45 % |
| Säurezahl | 50 mg/g |
| Dyn.Viskosität | 12300 mPa·s |
| pH-Wert, 10 %ige Lösung in Wasser | 9,5 |

Nach 18 Monaten Lagerzeit betrug die Viskosität immer noch ca. 12500 mPa·s, während der Blindwert ohne Kieselsäurezusatz von ca. 12 000 mPa·s bereits auf ca. 3500 mPa·s abgefallen war.

### Beispiel 3:

365 Teile eines urethan-modifizierten Alkydharzes gemäß Tabelle 3, Beispiel II/3 der AT-B 375 667 (DE-A 33 15 961) angelöst in 55 Teilen Butylglykol wurden in einer Lösung bestehend aus 506,5 Teilen Wasser, 25 Teilen 25 %igem Ammoniak und 48,5 Teilen einer 30 %igen wäßrigen Kieselsäuredispersion (®Klebosol R 30) dispergiert. Das Produkt wies folgende Kenndaten auf:

| | |
|---|---|
| Festkörper-Massenanteil | ca. 38 % |
| Säurezahl | 27 mg/g |
| Dyn.Viskosität | 4500 mPa·s |
| pH-Wert, 10 %ige Lösung in Wasser | 9,0 |

Innerhalb von ca. 5 Wochen stieg die Viskosität auf ca. 6500 mPa·s an und betrug nach 18 Monaten Lagerzeit ca. 6600 mPa·s, während der Blindwert ohne Kieselsäurezusatz von ca. 4000 mPa·s bereits auf ca. 800 mPa·s abgefallen war.

### Beispiel 4:

365 Teile eines acrylmodifizierten Alkydharzes gemäß Beispiel A 2 der AT-B 388 921 (EP-B 0 295 403) mit einer Säurezahl von 49 mg/g, angelöst in 55 Teilen Butylglykol, und 55 Teile Si(OCH₂CH₃)₄ wurden zu 90 Teilen Wasser zugegeben. Nach 6 Stunden Rühren bei 70 °C war kein Tetraäthoxysilan mehr nachweisbar. Nach der Zugabe von 20 Teilen 25 %igem Ammoniak wurde in 470 Teilen Wasser dispergiert. Das Produkt wies folgende Kenndaten auf:

| | |
|---|---|
| Festkörper-Massenanteil | ca. 38 % |
| Säurezahl | 55 mg/g |
| Dyn.Viskosität | 2700 mPa·s |
| pH-Wert, 10 %ige Lösung in Wasser | 7,3 |

Innerhalb von ca. 3 Wochen stieg die Viskosität auf ca. 3500 mPa·s an und betrug nach 18 Monaten ca. 3600 mPa·s, während der Blindwert ohne Einsatz von Si(OCH₂CH₃)₄ von einem Ausgangswert von ca. 2500 mPa·s bereits auf ca. 200 mPa·s abgefallen war.

### Beispiel 5:

Es wurde analog Beispiel 4 verfahren, aber anstelle von Si(OCH₂CH₃)₄ wurde Si[OCH₂CH₂N(CH₃)₂]₄ eingesetzt. Die Viskosität der wäßrigen Lösung stieg von 2800 mPa·s auf 3300 mPa·s innerhalb von 3 Wochen Lagerung bei Raumtemperatur an und blieb über 18 Monate konstant. Die Vergleichsdispersion ohne den Zusatz von Tetrakis(dimethylaminoäthoxy)silan hatte nach dieser Lagerung nach 18 Monaten eine Viskosität von ca. 200 mPa·s (s. Beispiel 4).

### Beispiel 6:

420 Teile eines Polyesters gemäß Beispiel 1 der AT-B 387 971 (EP-A 0 267 562), der mit trocknenden Fettsäuren und Acrylaten modifiziert ist, mit einer Säurezahl von 50 mg/g, 87 %ig angelöst in Butylglykol, wurden mit 19,5 Teilen 25 %igem Ammoniak und 25 Teilen einer 30 %igen Kieselsäuredispersion (®Klebosol R 30) dispergiert. Zu dieser Lösung wurden 24 Teile Tetraäthoxysilan gemischt, die Mischung wurde auf 70 °C erwärmt. Der entstandene Alkohol wurde abdestilliert. Anschließend wurde in 511,5 Teilen Wasser dispergiert. Das Produkt wies folgende Kenndaten auf:

| | |
|---|---|
| Festkörper-Massenanteil | ca. 38 % |
| Säurezahl | 55 mg/g |
| Dyn.Viskosität | 9500 mPa·s |
| pH-Wert, 10 %ige Lösung in Wasser | 8.4 |

Nach 18 Monaten betrug die Viskosität immer noch ca. 9400 mPa·s, während der Blindwert ohne Kieselsäure von einem Ausgangswert von ca. 9500 mPa·s bereits auf ca. 3000 mPa·s abgefallen war.

### Beispiel 7:

Es wurde wie in Beispiel 6 verfahren, aber es wurde zuerst Tetraäthoxysilan hydrolysiert und dann die 30 %ige Kieselsäuredispersion (®Klebosol R 30) zugesetzt. Die Ergebnisse waren wie bei Beispiel 6.

### Bewertung der Ergebnisse:

Auch nach einer Lagerzeit von 18 Monaten ist eine Lackformulierung mit viskositätsstabilisierten Polyester-Dispersionen möglich. Eine Lackformulierung mit den Blindproben war hingegen nicht mehr möglich.

## Patentansprüche

1. Viskositätsstabilisierte wäßrige Polyesterdispersionen, enthaltend
**a)** ein Säuregruppen enthaltendes Polyesterharz,
**b)** Neutralisationsmittel für das Polyesterharz a, wobei die Menge an Neutralisationsmittel ausreichend ist, um 10 bis 200 % der Stoffmenge an Säuregruppen im Polyesterharz a durch die zugegebene Menge an Neutralisationsmitteln in Salzgruppen zu überführen, wobei die Neutralisationsmittel ausgewählt sind aus Ammoniak und organischen Aminen, sowie Alkali- und Erdalkali-hydroxiden,
**c)** gegebenenfalls ein organisches Hilfslösungsmittel,
**d)** Kieselsäure in Form einer alkalisch stabilisierten wäßrigen Kieselsäure-Dispersion in einer Menge, daß die Masse an SiO₂ 0,1 bis 50 % der Masse des Polyesterharzes beträgt, und
**e)** Wasser.

2. Viskositätsstabilisierte wäßrige Polyesterdispersionen nach Anspruch 1, **dadurch gekennzeichnet, daß** die Polyesterharze a erhältlich sind durch Polykondensation einer Mischung bestehend aus einem oder mehreren mehrfunktionellen organischen Hydroxylverbindungen **aa** und einer oder mehreren mehrfunktionellen organischen Carbonsäuren **ab**, die,jeweils unabhängig voneinander eine mittlere Funktionalität von 1,3 bis 2,5 aufweisen.

3. Viskositätsstabilisierte wäßrige Polyesterdispersionen nach Anspruch 1, **dadurch gekennzeichnet, daß** das Polyesterharz a durch Mitverwendung bei der Kondensation von Edukten ausgewählt aus mehrfunktionellen Isocyanaten, Epoxidharzen und gesättigten und ungesättigten Fettsäuren modifiziert ist.

4. Viskositätsstabilisierte wäßrige Polyesterdispersionen nach Anspruch 1, **dadurch gekennzeichnet, daß** als Polyesterharz **a** ein Acryl-modifiziertes Polyesterharz eingesetzt wird, herstellbar durch Emulsionspolymerisation von olefinisch ungesättigten Monomeren in Gegenwart eines wasserlöslichen Alkydharzes, wobei der Massenanteil des Alkydharzes im feststoff des modifizierten Polyesters 30 bis 80 %, und der von den olefinisch ungesättigten Monomeren herrührende Massenanteil 20 bis 70 % beträgt.

5. Verfahren zur Herstellung von viskositätsstabilisierten wäßrigen Polyesterdispersionen nach Anspruch 1, **dadurch gekennzeichnet, daß** eine alkalisch stabilisierte wäßrige Kieselsäuredispersion **d**, Neutralisationsmittel **b**, Polyesterharz **a** und Wasser **e** sowie gegebenenfalls ein organisches Hilfslösungsmittel **c** gemischt werden.

6. Verfahren zur Herstellung von viskositätsstabilisierten wäßrigen Polyesterdispersionen nach Anspruch 1, **dadurch gekennzeichnet, daß** die wäßrige Kieselsäuredispersion **d** durch Hydrolyse von Alkoxysilanen mit Wasser hergestellt wird.

7. Verfahren nach Anspruch 5, **dadurch gekennzeichnet, daß** eine alkalisch stabilisierte wäßrige Kieselsäuredispersion **d** mit einer Menge an Neutralisationsmittel **b** versetzt wird, die so gewählt wird, daß 10 bis 200 % der Stoffmenge der dissoziierbaren Protonen der Säuregruppen des Polyesterharzes **a** gebunden oder neutralisiert werden können, und anschließend der Polyester **a** in dieser Dispersion emulgiert wird.

8. Verfahren nach Anspruch 5, **dadurch gekennzeichnet, daß** eine wäßrige Kieselsäuredispersion **d** mit einer Menge an Neutralisationsmittel **b** versetzt wird, die so gewählt wird, daß 10 bis 200 % der Stoffmenge der dissoziierbaren Protonen der Säuregruppen des Polyesterharzes **a** gebunden oder neutralisiert werden können, und anschließend diese Dispersion in dem Polyesterharz **a**, das gegebenenfalls in einem organischen Hilfslösungsmittel **c** angelöst ist, emulgiert wird.

9. Verfahren nach Anspruch 5, **dadurch gekennzeichnet, daß** eine wäßrige Kieselsäuredispersion **d** in dem Polyesterharz **a** dispergiert wird, das gegebenenfalls in einem organischen Hilfslösungsmittel **c** angelöst ist, und diese Mischung anschließend direkt oder invers in Neutralisationsmittel-hältiges Wasser **b** mit **e** emulgiert wird, wobei die Menge an Neutralisationsmittel **b** so gewählt wird, daß 10 bis 200 % der Stoffmenge der dissoziierbaren Protonen der Säuregruppen des Polyesterharzes **a** gebunden oder neutralisiert werden können.

10. Verwendung von viskositätsstabilisierten wäßrigen Polyesterdispersionen nach Anspruch 1 zur Herstellung von Bindemitteln für Anstrichmittel.

## Claims

1. A viscosity-stabilized aqueous polyester dispersion comprising
**a)** an acid-functional polyester resin,
**b**) neutralizing agents for the polyester resin **a**, the amount of neutralizing agent being sufficient to convert from 10 to 200% of the amount of substance of acid groups in the polyester resin **a** into salt groups by means of the amount of neutralizing agents added, the neutralizing agents being selected from ammonia and organic amines and also alkali metal hydroxides and alkaline earth metal hydroxides,
**c)** if desired, an organic auxiliary solvent,
**d)** silica in the form of an alkali-stabilized aqueous silica dispersion in an amount such that the mass of SiO₂ is from 0.1 to 50% of the mass of the polyester resin, and
**e)** water.

2. The viscosity-stabilized aqueous polyester dispersion as claimed in claim 1, wherein the polyester resins **a** are obtainable by polycondensation of a mixture consisting of one or more polyfunctional organic hydroxy compounds **aa** and one or more polyfunctional organic carboxylic acids **ab**, each of which independently of the other have an average functionality of from 1.3 to 2.5.

3. The viscosity-stabilized aqueous polyester dispersion as claimed in claim 1, wherein the polyester resin **a** has been modified by the use in the course of condensation of precursors selected from polyfunctional isocyanates, epoxy resins and saturated and unsaturated fatty acids.

4. The viscosity-stabilized aqueous polyester dispersion as claimed in claim 1, wherein use is made as polyester resin **a** of an acrylic-modified polyester resin which can be prepared by emulsion polymerization of olefinically unsaturated monomers in the presence of a water-soluble alkyd resin, the mass fraction of the alkyd resin in the solids of the modified polyester being from 30 to 80% and the mass fraction originating from the olefinically unsaturated monomers being from 20 to 70%.

5. A process for preparing a viscosity-stabilized aqueous polyester dispersion as claimed in claim 1, which comprises mixing an alkali-stabilized aqueous silica dispersion **d**, neutralizing agent **b**, polyester resin a and water **e** and, if desired, an organic auxiliary solvent **c**.

6. A process for preparing a viscosity-stabilized aqueous polyester dispersion as claimed in claim 1, wherein the aqueous silica dispersion **d** is prepared by hydrolysis of alkoxysilanes with water.

7. The process as claimed in claim 5, wherein an alkali-stabilized aqueous silica dispersion **d** is admixed with an amount of neutralizing agent **b** which is chosen such that from 10 to 200% of the amount of substance of the dissociable protons of the acid groups of the polyester resin **a** can be neutralized or bound, and subsequently the polyester **a** is emulsified in this dispersion.

8. The process as claimed in claim 5, wherein an aqueous silica dispersion **d** is admixed with an amount of neutralizing agent **b** which is chosen such that from 10 to 200% of the amount of substance of the dissociable protons of the acid groups of the polyester resin **a** can be neutralized or bound, and subsequently this dispersion is emulsified in the polyester resin **a**, which may have been partially dissolved in an organic auxiliary solvent **c**.

9. The process as claimed in claim 5, wherein an aqueous silica dispersion **d** is dispersed in the polyester resin **a**, which may have been partially dissolved in an organic auxiliary solvent **c**, and this mixture is subsequently emulsified, directly or inversely, in water **b**, containing neutralizing agent, with **e**, the amount of neutralizing agent **b** being chosen such that from 10 to 200% of the amount of substance of the dissociable protons of the acid groups of the polyester resin **a** can be neutralized or bound.

10. The use of a viscosity-stabilized aqueous polyester dispersion as claimed in claim 1 to prepare binders for coating compositions.

## Revendications

1. Dispersions aqueuses de polyester stabilisées en viscosité, contenant
a) une résine de polyester contenant des groupes acide,
b) des agents de neutralisation pour la résine de polyester **a**, la quantité d'agents de neutralisation étant suffisante, pour transformer de 10 à 200 % en mol de la quantité de groupes acides dans la résine de polyester **a** en groupes de sels au moyen de la quantité ajoutée d'agents de neutralisation, les agents de neutralisation étant choisis parmi l'ammoniac et les amines organiques, ainsi que les hydroxydes de métaux alcalins et alcalino-terreux,
c) éventuellement un cosolvant organique,
d) de l'acide silicique sous la forme d'une dispersion aqueuse d'acide silicique stabilisée en milieu alcalin en une quantité, qui élève la masse en SiO₂ de 0,1 à 50 % de la masse de la résine de polyester, et
e) de l'eau.

2. Dispersions aqueuses de polyester stabilisées en viscosité selon la revendication 1, **caractérisées en ce qu'**on peut obtenir les résines de polyester **a** par polycondensation d'un mélange constitué d'un ou de plusieurs composés hydroxyle organiques multifonctionnels **aa** et d'un ou de plusieurs acides carboxyliques organiques multifonctionnels **ab**, qui présentent respectivement indépendamment les uns des autres une fonctionnalité moyenne de 1,3 à 2,5.

3. Dispersions aqueuses de polyester stabilisées en viscosité selon la revendication 1, **caractérisées en ce que** la résine de polyester **a** est modifiée par l'utilisation conjointe au cours de la condensation d'éduits choisis parmi les isocyanates, les résines époxyde et les acides gras saturés et insaturés multifonctionnels.

4. Dispersions aqueuses de polyester stabilisées en viscosité selon la revendication 1, **caractérisées en ce qu'**on utilise comme résine de polyester **a** une résine de polyester modifiée par un groupe acrylique, que l'on peut préparer par polymérisation en émulsion de monomères oléfiniquement insaturés en présence d'une résine alkyde hydrosoluble, la proportion en masse de la résine alkyde dans la matière solide du polyester modifié étant de 30 à 80 %, et de 20 à 70 % de la proportion en masse provenant des monomères oléfiniquement insaturés.

5. Procédé de préparation de dispersions aqueuses de polyester stabilisées en viscosité selon la revendication 1, **caractérisé en ce qu'**on mélange une dispersion d'acide silicique aqueuse stabilisée en milieu alcalin **d**, des agents de neutralisation **b**, une résine de polyester **a** et de l'eau **e** ainsi qu'éventuellement un cosolvant organique **c**.

6. Procédé de préparation de dispersions aqueuses de polyester stabilisées en viscosité selon la revendication 1, **caractérisé en ce qu'**on prépare la dispersion aqueuse d'acide silicique d par hydrolyse d'alcoxysilanes avec de l'eau.

7. Procédé selon la revendication 5, **caractérisé en ce qu'**on ajoute à une dispersion aqueuse d'acide silicique **d** stabilisée en milieu alcalin une quantité d'agents de neutralisation **b**, qui est choisie de manière à ce que 10 à 200 % de la quantité de substances en mol des protons dissociables des groupes acides de la résine de polyester **a** puissent être liés ou neutralisés, et ensuite le polyester **a** est émulsionné dans cette dispersion.

8. Procédé selon la revendication 5, **caractérisé en ce qu'**on ajoute à une dispersion aqueuse d'acide silicique **d** stabilisée en milieu alcalin une quantité d'agents de neutralisation **b**, qui est choisie de manière à ce que 10 à 200 % de la quantité de substances en mol des protons dissociables des groupes acides de la résine de polyester **a** puissent être liés ou neutralisés, et ensuite cette dispersion est émulsionnée dans la résine de polyester **a**, qui est éventuellement dissoute dans un cosolvant organique **c**.

9. Procédé selon la revendication 5, **caractérisé en ce qu'**on disperse une dispersion d'acide silicique **d** dans la résine de polyester **a**, qui est éventuellement dissoute dans un cosolvant organique **c**, et on émulsionne ensuite ce mélange directement ou inversement dans de l'eau contenant des agents de neutralisation **b** avec **e**, la quantité d'agents de neutralisation **b** étant choisie de manière à ce que 10 à 200 % de la quantité de substances en mol des protons dissociables des groupes acides de la résine de polyester **a** puissent être liés ou neutralisés.

10. Utilisation de dispersions aqueuses de polyester stabilisées en viscosité selon la revendication 1 pour la préparation de liants pour les additifs de peintures.
